# EUROPÄISCHE PATENTSCHRIFT

(11) **EP 1 357 320 B1**
(45) Veröffentlichungstag und Bekanntmachung des Hinweises auf die Patenterteilung: **05.07.2006**
(21) Anmeldenummer: 03008485.9
(22) Anmeldetag: 11.04.2003
(51) Int. Cl.: F16K 11/02

(54) **Mehrwegventilanordnung**
Multiway valve
Soupape a voies multiples

(30) Priorität: 25.04.2002 DE 10218484
(43) Veröffentlichungstag der Anmeldung: 29.10.2003
(73) Patentinhaber: Dürr Systems GmbH, 70435 Stuttgart (DE)
(72) Erfinder: Dürr, Thomas, 71732 Tamm (DE); Baumann, Michael, 74223 Flein (DE); Goujavin, Pavel, 74523 Schwäbisch Hall (DE); Fritz, Hans-Georg, 73760 Ostfildern (DE)
(74) Vertreter: Heusler, Wolfgang

(56) Entgegenhaltungen:
- DE-B- 1 282 387
- DE-U- 8 706 584
- GB-A- 1 157 646
- GB-A- 2 289 743
- US-A- 2 786 642
- US-A- 3 369 496
- US-A- 3 734 133
- US-A- 3 744 524

## Beschreibung

Die Erfindung betrifft eine Mehrwegventilanordnung, insbesondere für eine Beschichtungsanlage, gemäß dem Oberbegriff des Anspruchs 1.

In Pulverlackbeschichtungsanlagen muss der Pulverlackstrom an verschiedenen Stellen geteilt bzw. in wechselnde Richtungen gelenkt werden. Hierzu werden herkömmlicherweise Y-förmige Leitungsverzweigungen eingesetzt, wobei die beiden abführenden Leitungen mit einem geeigneten Ventil (z.B. einem Quetschventil) verschlossen werden können, um den Pulverlackstrom in die gewünschte abführende Leitung zu lenken.

Nachteilig an derartigen Y-förmigen Leitungsverzweigungen ist die Tatsache, dass an der Abzweigungsstelle Pulverlackreste ansintern können, was bei einem späteren Ablösen der angesinterten Pulverlackreste zu Lackierfehlern führt.

Problematisch sind die Y-förmigen Leitungsverzweigungen auch dann, wenn nacheinander Pulverlackströme mit unterschiedlichen Farben gefördert werden sollen, da sich in der jeweils verschlossenen abführenden Leitung Pulverlackreste sammeln können, die bei einem Farbwechsel verschleppt werden, was ebenfalls zu einer Verschlechterung der Lackierqualität führt.

Schließlich sind die bekannten Y-förmigen Leitungsverzweigungen dann nachteilig, wenn eine der abführenden Leitungen eine Rückführung bildet, die den Pulverlackstrom beispielsweise zu einem Pulvervorrat zurückführt. Bei einem derartigen Einsatz einer Y-förmigen Leitungsverzweigung ist der Platzbedarf für die Schlauchführung nämlich relativ groß, da die maximal mögliche Schlauchkrümmung begrenzt ist.

Aus DE 1 282 387, US 3 369 496, GB 2 289 743 A, US 3 744 524, US 3 734 133, GB 1 157 646 sind ebenfalls herkömmliche y-förmige Leitungsverzweigungen bekannt, welche die vorstehend erwähnten Nachteile aufweisen.

Ferner ist aus DE 87 06 584 ein Bio-Membranventil bekannt, bei dem in einer Wandung einer Hauptleitung ein Durchbruch angeordnet ist, der in einer Abzweigungsleitung ausmündet. Der Fluidstrom durch die Abzweigungsleitung kann hierbei durch ein Membranventil verschlossen werden, wobei das Membranventil jedoch im geschlossenen Zustand den Hauptstrom in der Hauptleitung behindert.

Schließlich ist aus US 2 786 642 ein Einwegventil bekannt, das jedoch keine Abzweigung eines Fluidstroms erlaubt.

Der Erfindung liegt deshalb die Aufgabe zugrunde, die vorstehend beschriebene Mehrwegventilanordnung dahingehend zu verbessern, dass bei einem möglichst geringen Platzbedarf Farbverschleppungen bei einem Farbwechsel sowie Ansinterungen von Farbresten im Abzweigungsbereich möglichst weitgehend verhindert werden.

Die Aufgabe wird, ausgehend von der eingangs beschriebenen bekannten Mehrwegventilanordnung gemäß dem Oberbegriff des Anspruchs 1, durch die kennzeichnenden Merkmale des Anspruchs gelöst.

Die erfindungsgemäße Mehrwegventilanordnung weist hierzu eine Hauptleitung zur Führung eines Fluidstroms auf, wobei die Hauptleitung einen Zulauf und einen Ablauf aufweist.

Der Begriff Fluidstrom ist hierbei nicht auf Flüssigkeiten und Gase als strömende Fluide beschränkt, sondern umfasst beispielsweise auch Suspensionen, Dämpfe, und Aerosole. In der bevorzugten Ausführungsform handelt es sich jedoch bei dem Fluidstrom um einen Luftstrom, der Pulverlackpartikel mit sich führt.

Weiterhin weist die erfindungsgemäße Mehrwegventilanordnung eine Abzweigungsleitung auf, um mindestens einen Teil des in der Hauptleitung geführten Fluidstroms abzuzweigen, wobei der abgezweigte Fluidstrom durch ein erstes Ventil gesteuert werden kann.

Hierzu ist in der Wandung der Hauptleitung mindestens ein Durchbruch angeordnet, der in die Abzweigungsleitung mündet und durch das erste Ventil ganz oder teilweise verschließbar ist.

Falls der Durchbruch in der Wandung der Hauptleitung von dem ersten Ventil vollständig geschlossen wird, so erfolgt keine Abzweigung und der Fluidstrom fließt vollständig in der Hauptleitung weiter.

Falls der Durchbruch in der Wandung der Hauptleitung dagegen von dem ersten Ventil freigegeben wird, so fließt ein Teil des Fluidstroms in die Abzweigungsleitung und wird dort weitergeführt.

Die Erfindung ist jedoch nicht auf solche Ausführungsformen beschränkt, bei denen der Durchbruch in der Wandung der Hauptleitung entweder vollständig verschlossen oder vollständig freigegeben wird. Es ist vielmehr auch möglich, dass das erste Ventil Zwischenstellungen aufweist, in denen der Durchbruch in der Wandung der Hauptleitung mehr oder weniger freigegeben bzw. verschlossen ist. Dies bietet die Möglichkeit einer stufenweisen oder kontinuierlichen Steuerung des in die Abzweigungsleitung abgezweigten Fluidstroms. Es ist deshalb möglich, dass das erste Ventil stufenweise oder kontinuierlich einstellbar ist.

Der im Rahmen der Erfindung verwendete Begriff eines Durchbruchs in der Wandung der Hauptleitung ist allgemein zu verstehen und umfasst beispielsweise zylindrische Bohrungen, Schlitze oder ähnliche Öffnungen. Darüber hinaus ist es auch möglich, dass die Hauptleitung zweiteilig ist, wobei die beiden Teile der Hauptleitung bis auf einen ringförmigen Spalt aneinandergrenzen, so dass der Durchbruch aus dem ringförmigen Spalt besteht.

Gemäß der Erfindung weist das erste Ventil jedoch eine elastische Dichtungsmanschette auf, welche die Hauptleitung im Bereich des Durchbruchs mindestens teilweise umgibt. Falls die Dichtungsmanschette außen an der Mantelfläche der Hauptleitung anliegt, so wird der Durchbruch in der Wandung der Hauptleitung abgedichtet, so dass kein Fluidstrom in die Abzweigungsleitung abgezweigt wird. Falls die elastische Dichtungsmanschette dagegen von der Mantelfäche der Hauptleitung abgehoben wird, so kann ein Teil des in der Hauptleitung geführten Fluidstroms durch den Durchbruch in der Wandung der Hauptleitung hindurch in den radialen Zwischenraum zwischen der Dichtungsmanschette und der Hauptleitung eintreten und dort in die Abzweigungsleitung weitergeführt werden. Zur Steuerung des abgezweigten Fluidstroms wird die Dichtungsmanschette also entweder an die äußere Mantelfläche der Hauptleitung im Bereich des Durchbruchs angelegt oder davon abgehoben.

Die gewünschte Einstellung der Dichtungsmanschette erfolgt vorzugsweise pneumatisch oder hydraulisch, indem die Dichtungsmanschette von außen mit einem vorgegebenen steuerbaren Druck beaufschlagt wird. In der bevorzugten Ausführungsform der Erfindung ist hierzu ein Druckraum vorgesehen, der die Dichtungsmanschette mindestens teilweise umgibt, wobei der Druckraum zur steuerbaren Druckbeaufschlagung mit einer Druckleitung verbunden ist. Falls über die Druckleitung ein Strömungsmedium (z.B. Druckluft) in den Druckraum gepumpt wird, so wird die Dichtungsmanschette an die äußere Mantelfläche der Hauptleitung angepresst, so dass der Durchbruch in der Wandung der Hauptleitung abgedichtet wird und demzufolge kein Fluidstrom in die Abzweigungsleitung abgezweigt wird. Falls der Druck in dem Druckraum dagegen kleiner oder gleich dem Umgebungsdruck ist, so hebt sich die Dichtungsmanschette aufgrund ihrer Eigenelastizität von der äußeren Mantelfläche der Hauptleitung ab, so dass der Durchbruch in der Wandung der Hauptleitung freigegeben wird, was zu einem Abzweigen eines Teils des in der Hauptleitung geführten Fluidstroms führt.

Der vorstehend beschriebene Druckraum wird vorzugsweise durch eine Hülse gebildet, welche die Dichtungsmanschette und die Hauptleitung umgibt und im Bereich ihrer Enden mit der Dichtungsmanschette druckfest abschließt, wobei die Hülse vorzugsweise einen Anschluss für die Druckleitung aufweist.

Im geöffneten Zustand des Abzweigungsventils gelangt ein Teil des Fluidstroms durch den Durchbruch in der Wandung der Hauptleitung in den radial zwischen der Dichtungsmanschette und der Hauptleitung gelegenen Raum und wird anschließend in die Abzweigungsleitung weitergeführt. In der bevorzugten Ausführungsform der Erfindung mündet der radial zwischen der Dichtungsmanschette und der Hauptleitung gelegene Raum deshalb an einem ersten Ende der Dichtungsmanschette in die Abzweigungsleitung, wobei das erste Ende der Dichtungsmanschette vorzugsweise stromaufwärts liegt, was insbesondere bei der eingangs beschriebenen Rückführung vorteilhaft ist.

In einer Variante der Erfindung ist vorgesehen, dass der radial zwischen der Dichtungsmanschette und der Hauptleitung gelegene Raum an einem zweiten Ende der Dichtungsmanschette in eine Spülleitung übergeht, wobei das zweite Ende der Dichtungsmanschette vorzugsweise stromabwärts liegt. Über die Spülleitung kann dann ein Spülmedium in den Zwischenraum zwischen der Dichtungsmanschette und der Hauptleitung eingespült werden, wobei das Spülmedium anschließend über die Abzweigungsleitung abgeführt wird. Auf diese Weise lassen sich beispielsweise Farbreste entfernen, die in diesem Bereich haften geblieben sind.

Darüber hinaus ist in der bevorzugten Ausführungsform der Erfindung ein weiteres Ventil vorgesehen, das in dem Ablauf der Hauptleitung angeordnet ist und somit ebenfalls zu einer Steuerung des abgezweigten Fluidstroms beiträgt.

Vorzugsweise ist der Durchbruch in der Wandung der Hauptleitung im Bereich der stromabwärts gelegenen Hälfte oder des stromabwärts gelegenen Drittels der Dichtungsmanschette angeordnet. Dies ist vorteilhaft, da so zwischen der stromaufwärts gelegenen Abzweigungsleitung und dem stromabwärts gelegenen Durchbruch eine Dichtungsfläche mit einer großen axialen Länge vorhanden ist, was zu einer guten Dichtwirkung beiträgt.

Besonders vorteilhaft an der erfindungsgemäßen Mehrwegventilanordnung ist die Tatsache, dass die Hauptleitung knickfrei sein kann, wodurch Ansinterungen oder Farbverschleppungen weitgehend verhindert werden. Vorzugsweise weist die Hauptleitung deshalb einen geradlinigen Verlauf auf, jedoch sind auch gekrümmte Verläufe der Hauptleitung möglich.

Andere vorteilhafte Weiterbildungen der Erfindung sind in den Unteransprüchen gekennzeichnet und werden nachstehend zusammen mit der Beschreibung des bevorzugten Ausführungsbeispiels der Erfindung anhand der Figuren näher erläutert. Es zeigen:
- Fig.1: eine Querschnittsdarstellung einer erfindungsgemäßen Mehrwegventilanordnung mit einem geschlossenen Abzweigungsventil sowie
- Fig.2: eine Querschnittsdarstellung der Mehrwegventilanordnung aus Fig. 1 mit einem geöffneten Abzweigungsventil.

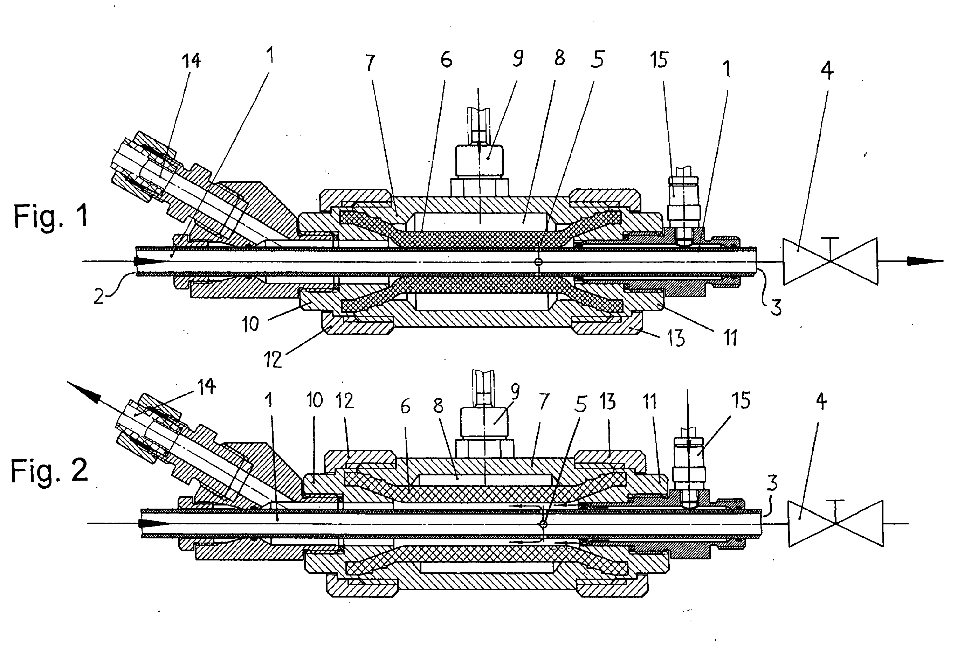

Die in den Figuren 1 und 2 dargestellte Mehrwegventilanordnung kann beispielsweise in einer Pulverlack-Beschichtungsanlage zur Führung eines Pulverlackstroms eingesetzt werden.

Hierzu weist die Mehrwegventilanordnung eine Hauptleitung 1 mit einem stromaufwärts gelegenen Zulauf 2 und einem stromabwärts gelegenen Ablauf 3 auf, wobei die Hauptleitung 1 einen geradlinigen Verlauf aufweist, um Ansinterungen von Pulverlackresten zu vermeiden.

In dem Ablauf 3 der Hauptleitung 1 ist ein steuerbares Ventil 4 angeordnet, das herkömmlich aufgebaut ist, und den durch den Ablauf 3 der Hauptleitung 1 abgeführten Pulverlackstrom steuert.

In der Wandung der Hauptleitung 1 befinden sich mehrere zylindrische Durchbrüche 5, die über den Umfang der Hauptleitung 1 gleichmäßig verteilt angeordnet sind. Die Durchbrüche 5 dienen zur Abzweigung eines Teils des in der Hauptleitung 1 geführten Pulverlackstroms, wobei die Durchbrüche 5 durch ein Abzweigungsventil freigegeben oder verschlossen werden können.

Hierzu ist eine elastische Dichtungsmanschette 6 vorgesehen, welche die Hauptleitung 1 koaxial umgibt und die Durchbrüche 5 in der Wandung der Hauptleitung 1 freigeben oder verschließen kann. Ohne äußere Kräfte liegt die Dichtungsmanschette 6 nicht an der äußeren Mantelfläche der Hauptleitung 1 an, so dass zwischen der Dichtungsmanschette 6 und der Wandung der Hauptleitung 1 ein zylindrischer Spalt besteht, in den Pulverlack eintreten kann, wie in Fig. 2 dargestellt ist.

Die Dichtungsmanschette 6 ist von einer Hülse 7 umgeben, wobei die Hülse 7 an ihren Enden mit der Druckmanschette 6 druckfest abschließt, so dass sich zwischen der Hülse 7 und der Dichtungsmanschette 6 ein Druckraum 8 bildet. An ihrer äußeren Mantelfläche weist die Hülse 7 einen Anschluss 9 für eine Druckleitung auf, über die der Druckraum 8 mit Druckluft beaufschlagt werden kann, um die Dichtungsmanschette 6 an die äußere Mantelfläche der Hauptleitung 1 anzupressen und die Durchbrüche 5 in der Wandung der Hauptleitung 1 dadurch abzudichten, wie in Fig. 1 dargestellt ist.

An ihren stirnseitigen Enden wird die Dichtungsmanschette 6 von jeweils einer dornförmigen Buchse 10, 11 geführt, wobei die beiden dornförmigen Buchsen 10, 11 durch jeweils eine Überwurfmutter 12, 13 mit der Hülse 7 verschraubt sind.

Die stromaufwärts gelegene Buchse 10 weist hierbei an ihrer Innenseite einen axial verlaufenden Strömungskanal auf, durch den in dem in Figur 2 gezeigten Zustand der Dichtungsmanschette 6 Pulverlack stromaufwärts in eine Abzweigungsleitung 14 strömen kann.

Auch die stromabwärts gelegene Buchse 11 weist an ihrer Innenseite einen axial verlaufenden Strömungskanal auf, der stromabwärts in eine Spülleitung 15 mündet, so dass der radial zwischen der Dichtungsmanschette 6 und der Wandung der Hauptleitung 1 gelegene Raum über die Spülleitung 15 gespült werden kann, wenn die Dichtungsmanschette 6 von der äußeren Mantelfläche der Hauptleitung 1 abgehoben ist.

Die Erfindung ist nicht auf das vorstehend beschriebene bevorzugte Ausführungsbeispiel beschränkt. Vielmehr ist eine Vielzahl von Varianten und Abwandlungen denkbar, die in den Schutzbereich gemäß den Ansprüchen fallen.

## Patentansprüche

1. Mehrwegventilanordnung, insbesondere für eine Beschichtungsanlage, mit
- einer Hauptleitung (1) zur Führung eines Fluidstroms, wobei die Hauptleitung (1) einen Zulauf (2) und einen Ablauf (3) aufweist,
- einer Abzweigungsleitung (14) zum Abzweigen mindestens eines Teils des in der Hauptleitung (1) geführten Fluidstroms, sowie
- einem Abzweigungsventil (6-13) zur Steuerung des abgezweigten Fluidstroms,
wobei in der Wandung der Hauptleitung (1) mindestens ein Durchbruch (5) angeordnet ist, der in die Abzweigungsleitung (14) mündet und durch das Abzweigungsventil (6-13) ganz oder teilweise verschließbar ist.
**dadurch gekennzeichnet,**
**daß** das Abzweigungsventil (6-13) eine elastische Dichtungsmanschette (6) aufweist, welche die Hauptleitung (1) im Bereich des Durchbruchs (5) umgibt.

2. Mehrwegventilanordnung nach Anspruch 1, **dadurch gekennzeichnet, daß** das Abzweigungsventil (6-13) einen Druckraum (8) aufweist, der die Dichtungsmanschette (6) mindestens teilweise umgibt, wobei der Druckraum (8) zur steuerbaren Druckbeaufschlagung mit einer Druckleitung (9) verbunden ist.

3. Mehrwegventilanordnung nach Anspruch 2, **dadurch gekennzeichnet, daß** zur Bildung des Druckraums (8) eine Hülse (7) vorgesehen ist, welche die Dichtungsmanschette (6) und die Hauptleitung (1) umgibt und im Bereich ihrer Enden mit der Dichtungsmanschette (6) druckfest abschließt.

4. Mehrwegventilanordnung nach Anspruch 2 und/oder Anspruch 3, **dadurch gekennzeichnet, daß** der radial zwischen der Dichtungsmanschette (6) und der Hauptleitung (1) gelegene Raum an einem ersten Ende der Dichtungsmanschette (6) in die Abzweigungsleitung (14) übergeht.

5. Mehrwegventilanordnung nach Anspruch 4, **dadurch gekennzeichnet, daß** das erste Ende der Dichtungsmanschette (6) stromaufwärts liegt.

6. Mehrwegventilanordnung nach mindestens einem der vorhergehenden Ansprüche, **dadurch gekennzeichnet, daß** der radial zwischen der Dichtungsmanschette (6) und der Hauptleitung (1) gelegene Raum an einem zweiten Ende der Dichtungsmanschette (6) in eine Spülleitung (15) übergeht.

7. Mehrwegventilanordnung nach Anspruch 6, **dadurch gekennzeichnet, daß** das zweite Ende der Dichtungsmanschette (6) stromabwärts liegt.

8. Mehrwegeventilanordnung nach mindestens einem der Ansprüche 1 bis 7, **dadurch gekennzeichnet, daß** der Durchbruch (5) in der Wandung der Hauptleitung (1) im Bereich der stromabwärts gelegenen Hälfte oder des stromabwärts gelegenen Drittels der Dichtungsmanschette (6) angeordnet ist.

9. Mehrwegventilanordnung nach mindestens einem der vorhergehenden Ansprüche, **dadurch gekennzeichnet, daß** in dem Ablauf (3) der Hauptleitung (1) ein Ablaufventil (4) angeordnet ist.

10. Mehrwegventilanordnung nach mindestens einem der vorhergehenden Ansprüche, **dadurch gekennzeichnet, daß** die Hauptleitung (1) einen knickfreien Verlauf aufweist.

## Claims

1. Multi-way valve arrangement, in particular for a coating installation, with
- a main line (1) for guiding a fluid flow, wherein the main line (1) has an inlet (29) and an outlet (3),
- a branch line (14) for branching off at least a part of the fluid flow guided in the main line (1), and
- a branching valve (6-13) for control of the fluid flow which is branched off,
wherein there is disposed in the wall of the main line (1) at least one opening (5) which opens into the branch line (14) and can be completely or partially closed by the branching valve (6-13),
**characterised in that** the branching valve (6-13) has a resilient sealing sleeve (6) which surrounds the main line (1) in the region of the opening (5).

2. Multi-way valve arrangement as claimed in Claim 1, **characterised in that** the branching valve (6-13) has a pressure chamber (8) which at least partially surrounds the sealing sleeve (6), the pressure chamber (8) being connected to a pressure line (9) for the controllable application of pressure.

3. Multi-way valve arrangement as claimed in Claim 2, **characterised in that** in order to form the pressure chamber (8) a sheath (7) is provided which surrounds the sealing sleeve (6) and the main line (1) and in the region of its ends terminates so as to be pressure-resistant with the sealing sleeve (6).

4. Multi-way valve arrangement as claimed in Claim 2 and/or Claim 3, **characterised in that** the space located radially between the sealing sleeve (6) and the main line (1) merges at a first end of the sealing sleeve (6) into the branch line (14).

5. Multi-way valve arrangement as claimed in Claim 4, **characterised in that** the first end of the sealing sleeve (6) lies upstream.

6. Multi-way valve arrangement as claimed in at least one of the preceding claims, **characterised in that** the space located radially between the sealing sleeve (6) and the main line (1) merges at a second end of the sealing sleeve (6) into a flushing line (195).

7. Multi-way valve arrangement as claimed in Claim 6, **characterised in that** the second end of the sealing sleeve (6) lies downstream.

8. Multi-way valve arrangement as claimed in at least one of Claims 1 to 7, **characterised in that** the opening (5) in the wall of the main line (1) is disposed in the region of the downstream half or the downstream third of the sealing sleeve (6).

9. Multi-way valve arrangement as claimed in at least one of the preceding claims, **characterised in that** an outlet valve (4) is disposed in the outlet (3) of the main line (1).

10. Multi-way valve arrangement as claimed in at least one of the preceding claims, **characterised in that** the main line (1) extends without kinking.

## Revendications

1. Agencement de soupapes à voies multiples, en particulier pour une installation de revêtement, comportant
- une conduite principale (1) pour guider un courant de fluide, la conduite principale (1) comportant une arrivée (2) et un départ (3),
- une conduite de dérivation (14) pour dériver au moins une partie du courant de fluide guidé dans la conduite principale (1), ainsi que
- une soupape de dérivation (6-13) pour la commande du courant de fluide dérivé,
dans la paroi de la conduite principale (1) étant disposé au moins un ajour (5) qui débouche dans la conduite de dérivation (14) et peut être fermé entièrement ou partiellement par la soupape de dérivation (6-13),
**caractérisé en ce que** la soupape de dérivation (6-13) comporte un manchon d'étanchéité (6) élastique qui entoure la conduite principale (1) dans la zone de l'ajour (5).

2. Agencement de soupapes à voies multiples selon la revendication 1, **caractérisé en ce que** la soupape de dérivation (6-13) comporte une chambre sous pression (8) qui entoure au moins en partie le manchon d'étanchéité (6), la chambre sous pression (8) étant reliée à une conduite sous pression (9) pour faire agir la pression de manière commandée.

3. Agencement de soupapes à voies multiples selon la revendication 2, **caractérisé en ce que** pour former la chambre sous pression (8) il est prévu une gaine (7) qui entoure le manchon d'étanchéité (6) et la conduite principale (1) et qui, dans la zone de ses extrémités, est fermée avec le manchon d'étanchéité (6) de manière à résister à la pression.

4. Agencement de soupapes à voies multiples selon la revendication 2 et/ou la revendication 3, **caractérisé en ce que** le volume, situé radialement entre le manchon d'étanchéité (6) et la conduite principale (1), se prolonge, à une première extrémité du manchon d'étanchéité (6), par la conduite de dérivation (14).

5. Agencement de soupapes à voies multiples selon la revendication 4, **caractérisé en ce que** la première extrémité du manchon d'étanchéité (6) se situe en amont.

6. Agencement de soupapes à voies multiples selon l'une au moins des revendications précédentes, **caractérisé en ce que** le volume situé radialement entre le manchon d'étanchéité (6) et la conduite principale (1), se prolonge par une conduite de lavage (15), à une deuxième extrémité du manchon d'étanchéité (6).

7. Agencement de soupapes à voies multiples selon la revendication 6, **caractérisé en ce que** la deuxième extrémité du manchon d'étanchéité (6) se situe en aval.

8. Agencement de soupapes à voies multiples selon l'une au moins des revendications 1 à 7, **caractérisé en ce que** l'ajour (5) dans la paroi de la conduite principale (1) est disposé dans la moitié située en aval ou le tiers situé en aval du manchon d'étanchéité (6).

9. Agencement de soupapes à voies multiples selon l'une au moins des revendications précédentes, **caractérisé en ce qu'**une soupape d'évacuation (4) est disposée dans le départ (3) de la conduite principale (1).

10. Agencement de soupapes à voies multiples selon l'une au moins des revendications précédentes, **caractérisé en ce que** la conduite principale (1) présente un tracé sans coude.
